# EUROPÄISCHE PATENTSCHRIFT

(11) **EP 2 623 243 B1**
(45) Veröffentlichungstag und Bekanntmachung des Hinweises auf die Patenterteilung: **22.07.2015**
(21) Anmeldenummer: 13153311.9
(22) Anmeldetag: 30.01.2013
(51) Int. Cl.: B23D 63/14

(54) **Kreissägeblattschleifmaschine**
Circular saw blade grinding machine
Machine à affûter des lames de scie circulaires

(30) Priorität: 02.02.2012 CH 1422012
(43) Veröffentlichungstag der Anmeldung: 07.08.2013
(73) Patentinhaber: Iseli & Co. AG Maschinenfabrik, 6247 Schötz (CH)
(72) Erfinder: Iseli, Benno, 6247 Schötz (CH)
(74) Vertreter: Schneider Feldmann AG Patent- und Markenanwälte

(56) Entgegenhaltungen:
- JP-A- 2011 005 597

## Beschreibung

Die vorliegende Erfindung betrifft eine Kreissägeblattschleifmaschine gemäß dem Oberbegriff des unabhängigen Anspruchs 1. Eine solche Kreissägeblattschleifmaschine ist der JP 2011-5597 A zu entnehmen.

Kreissägeblattschleifmaschinen sind seit langem bekannt. Dies trifft auch zu auf Kreissägeblätter die mit Hartmetalleinsätzen an den Zähnen versehen sind. Diese Hartmetalleinsätze müssen an den Flächen der Zahnbrust und des Zahnrückens geschliffen werden und deren gemeinsame Kante bildet die Schneidkante. Zusätzlich müssen auch die Seitenflächen des Hartmetalleinsatzes, oftmals auch Zahnflanken genannt, geschliffen werden. Herkömmlicherweise werden an einer ersten Station diese Zahnflanken geschliffen und in einer zweiten Station Zahnrücken und Zahnbrust bearbeitet. Das Schleifen der Seitenflächen der Hartmetalleinsätze, beziehungsweise der Zahnflanken, wird oftmals als egalisieren bezeichnet.

Bereits aus der DE-2751408A ist eine Kreissägeblattschleifmaschine bekannt mit einer einzigen Schleifscheibe und einem über eine Transmission damit verbunden Antriebsmotor. Praktisch einseitig gelagert, lässt sich mittels eines Kipplagers die Schleifscheibe zusammen mit dem Antrieb verschwenken und um eine senkrecht dazu verlaufende Achse nochmals verdrehen.

Auch aus der EP0115329A ist eine Sägezahnschleifmaschine bekannt, wobei hier um den Verschwenkwinkel des Schleifkopfes zu reduzieren eine besonders gestaltete Schleifscheibe als Tellerscheibe ausgebildet ist. Hiermit lassen sich aber lediglich Zahnrücken und Zahnbrust schleifen.

Bereits in der EP115329A wird darauf hingewiesen, dass Sägezahnschleifmaschinen zum Schleifen von Sägeblattzähnen, insbesondere mit Hartmetalleinsätzen, mit einem einzigen um mehrere Achsen schwenkbaren und in mehrere Richtungen translatorisch bewegbaren, zugleich für das Schleifen der Zahnbrust und des Zahnrückens zu benutzenden Schleifkopf bekannt ist. Hinweise, die darauf verweisen, dass auch die Zahnflanken mittels einem einzigen Antriebsmotor auch noch geschliffen werden können, zusätzlich zu den bekannten Maschinen, bei denen Zahnbrust und Zahnrücken geschliffen werden, sind hier nicht erwähnt. Erst aus der EP1379352B wird eine Kreissägeblattschleifmaschine bekannt, mit der sämtliche Flächen eines Hartmetalleinsatzes geschliffen werden können. Dies erfolgt jedoch mittels zwei Bearbeitungsstationen innerhalb derselben Maschine.

Die Qualität eines Kreissägeblattes hängt vor allem von der exakten Bearbeitung der Hartmetalleinsätze ab. Auch geringe Abweichungen führen zu unregelmässigen Beanspruchungen und entsprechend werden die Hartmetalleinsätze unsymmetrisch belastet und führen dann zu deren Zerstörung oder zu einem Herausbrechen.

Es ist daher die Aufgabe der vorliegenden Erfindung, eine Kreissägeblattschleifmaschine zu schaffen, die mit einem einzigen Antriebsmotor ausgerüstet ist, mit der aber sämtliche Flächen der Hartmetalleinsätze bearbeitet werden können, und wobei die Führung des Antriebmotors, beziehungsweise deren Arbeitsspindel möglichst schwingungsarm und präzise geführt wird und wobei sämtliche Flächen der Hartmetalleinsätze mit den planen Seitenflächen der Schleifscheiben bearbeitbar sind.

Diese Aufgabe löst eine Kreissägeblattschleifmaschine mit allen Merkmalen des unabhängigen Anspruchs 1.

Weitere bevorzugte Ausführungsformen des Erfindungsgegenstandes gehen aus den abhängigen Patentansprüchen hervor und die Bedeutung und Vorteile dieser bevorzugten Ausführungsformen sind in der nachfolgenden Beschreibung unter Bezug auf die anliegenden Zeichnungen erläutert.

In der Zeichnung ist eine bevorzugte Ausführungsform der erfindungsgemässen Kreissägeblattschleifmaschine dargestellt. Es zeigt:
- Figur 1: zeigt die Kreisblattschleifmaschine in einer perspektivischen Ansicht unter Weglassung der Maschinenverschalung, der Steuerung und des Maschinenbettes, während
- Figur 2: dieselbe Anordnung wie in Figur 1 in einer Seitenansicht und
- Figur 3: in einer Ansicht von oben zeigt.
- Figur 4: stellt eine Teilansicht der Maschine mit aufgespannten Kreissägeblatt dar, mit der teilweise sichtbaren Kreissägeblattvorschubvorrichtung.
- Figur 5: zeigt den Schleifkopf der Maschine für sich alleine in einer perspektivischen Ansicht und
- Figur 6: diesen in einer Ansicht von oben.
- Figur 7: stellt schliesslich die Lagerungen der Pinole dar, unter Weglassung einer, in Blickrichtung vorderen, Maschinenwand mit Sicht auf die kreisbogenförmigen Zahnstangen.
- Figur 8: dient der Erläuterung der Gestalt der Zähne, beziehungsweise deren Hartmetalleinsätze eines Kreissägeblattes.

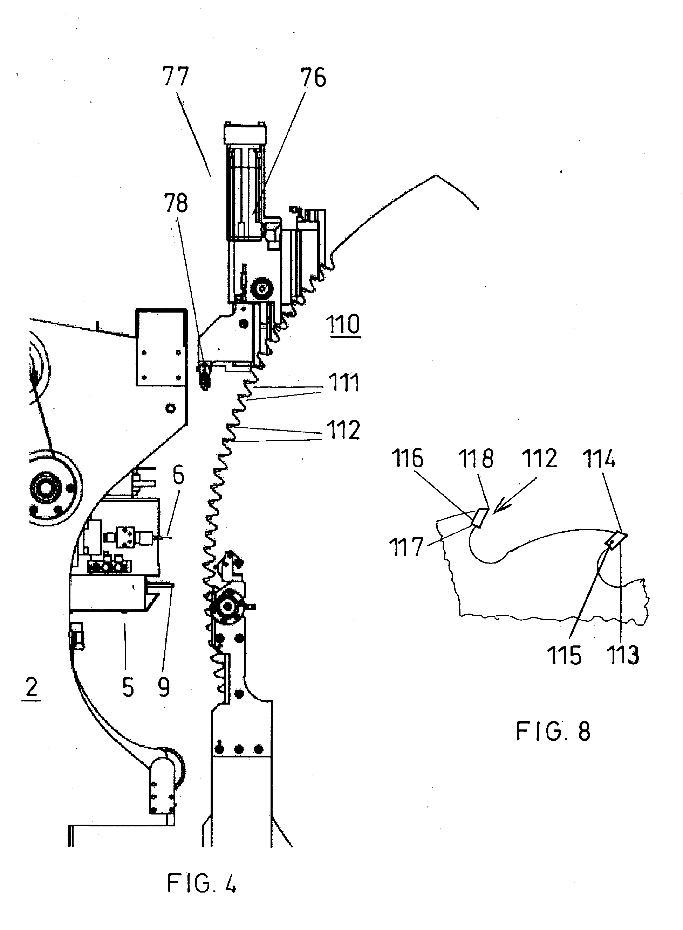

Zur Erläuterung und besseren Verständnisses der erfindungsgemässen Kreissägeblattschleifmaschine wird vorerst auf die Figur 8 verwiesen, in der ein Ausschnitt des Kreissägeblattes 110 im grösseren Massstab dargestellt ist und anhand der die Begriffsdefinitionen erfolgen. Das Kreissägeblatt selbst ist mit 110 bezeichnet. Dieses weist daraus ausgeschnittene Zähne 111 auf, in denen Hartmetalleinsätze 112 eingelötet sind. Jeder Hartmetalleinsatz weist eine Zahnbrust 113 auf, die in Drehrichtung zuvorderst liegt und einen Zahnrücken 114 der in etwa tangential zum Umfang des Kreissägeblattes 110 verläuft. Die Seitenflächen, die meist als Zahnflanken bezeichnet werden, haben die Bezugszahl 115. Der Zahnbrust gegenüber ist eine Auflagefläche 116 und dem Zahnrücken gegenüber eine Anlagefläche 117 vorhanden. Die letztbenannten Flächen bilden die Lötflächen der Hartmetalleinsätze 112 im Kreissägeblatt 110. Zahnbrust 113 und Zahnrücken 114 bilden an ihrer gemeinsamen Kante die Schneidkante 118. Oftmals, jedoch nicht immer und nicht zwingend, weisen die Hartmetalleinsätze in der Zahnbrust 113 eine hier nicht dargestellte Rille auf, die bis in die Schneidkante 118 verläuft und als sogenannter Spanbrecher dient. Die Rille verläuft parallel zu den Seitenkanten der Zahnflanken 115, doch müssen sie keineswegs in allen Hartmetalleinsätzen am gleichen Ort angebracht sein, sondern können durchwegs abwechslungsweise einmal links, einmal rechts von der Mitte angeordnet sein.

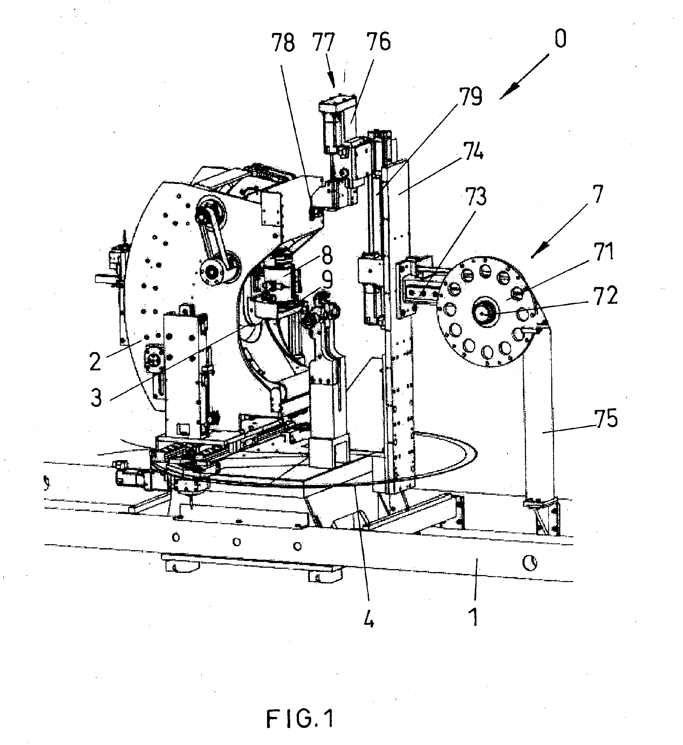

Die Kreissägeblattschleifmaschine ist insgesamt mit der Referenznummer 0 versehen. In der Zeichnung ist diese Maschine immer unter Weglassung der entsprechenden, vorhandenen Abdeckungen dargestellt. Aufgebaut ist die Kreissägeblattschleifmaschine 0 wie üblich auf einem Maschinenbett 1. Das Maschinenbett 1 besitzt eine Drehlagerplatte 4, die hier lediglich symbolisch durch einen kreisförmigen Lagerring dargestellt ist. Auf dieser Drehlagerplatte 4 ruhen zwei vertikale Maschinenlagerwände 2. Diese haben im wesentlich die Form von Kreisringsegmenten. In der Figur 1 ist die vordere Maschinenlagerwand 2 von der Aussenseite zu sehen. Die zweite, parallele Maschinenlagerwand 2 ist nur teilweise erkennbar und die wenigen Bereiche die sichtbar sind, zeigen die Innenseite der entsprechenden Maschinenlagerwand 2.

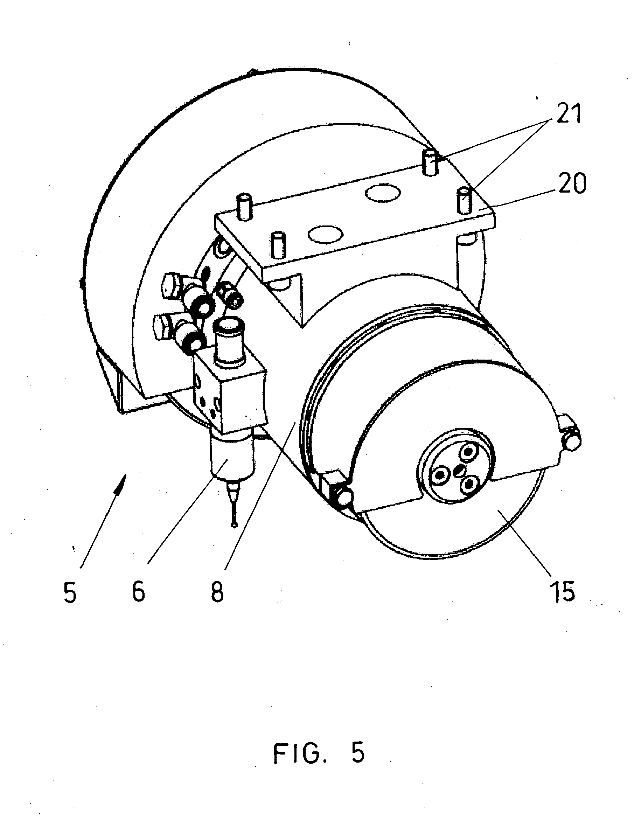

Zwischen den beiden Maschinenlagerwände 2 ist eine Pinole 3 gelagert. Die Pinole 3 besteht im Wesentlichen aus zwei Hohlrohrabschnitten, die zusammen ein teleskopisch verschiebbares Rohr bilden, wobei das äussere Rohr drehfest und achsial unverschiebbar mit den beiden Maschinenlagerwänden mittelbar verbunden ist, während das innere Rohr in der achsialen Längsachse verschiebbar ist. An diesem inneren Rohrabschnitt ist der Schleifkopf 5 fest angeordnet. Auf dem Schleifkopf 5 wird später in der Erläuterung der Figur 5 eingegangen.

Das zu bearbeitende Kreissägeblatt 110 wird jeweils auf einer Kreissägeblattaufspannanordnung 7, die nachfolgend kurz nur noch als Aufspannanordnung 7 bezeichnet wird, befestigt. Die Aufspannanordnung weist eine Aufspannplatte 71 auf, welche mit einem Drehlager 72 verbunden ist und dessen Drehachse in einem horizontalen Balken 73 ruht. Dieser horizontale Balken 73 ist fest an einem vertikalen Stützbalken 74 gehalten. Zusätzlich zur Stabilisation kann ein zweiter vertikaler Stützbalken 75 vorgesehen sein. Am ersten Stützbalken 74 ist eine Schienenplatte angebracht, auf der höhenverstellbar, beispielsweise mittels einem Schrittmotor 76, eine Vorschubvorrichtung 77 mit einer Klinke 78 angebracht ist, die mit Hilfe des Servomotors 76 auf einer Schiene 79 verschiebbar ist und dabei die Klinke 78 auf den bereits bearbeiteten Hartmetalleinsatz drückt und dadurch dass Kreissägeblatt 110 um eine Zahnteilung vorschiebt.

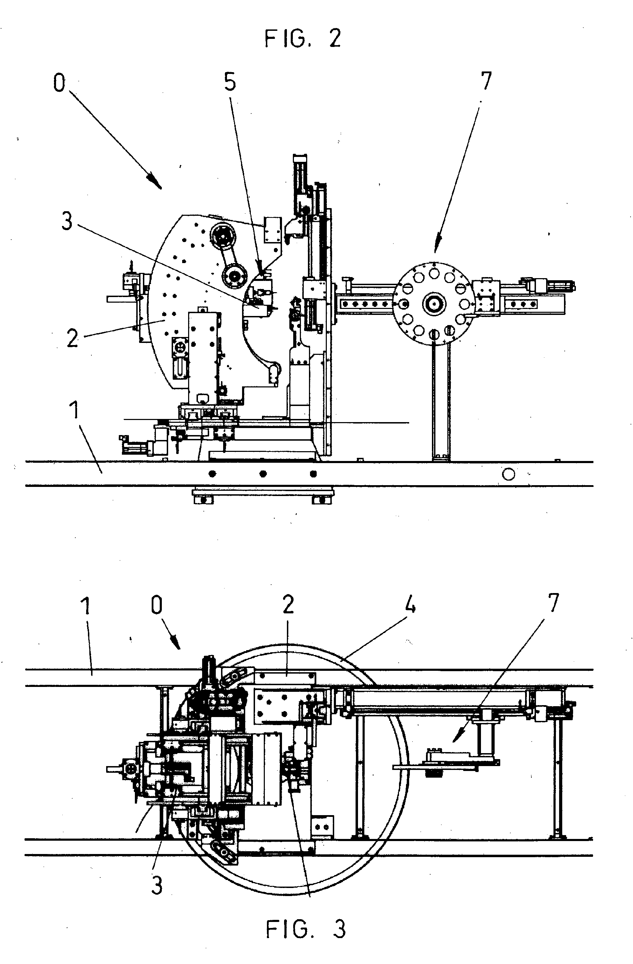

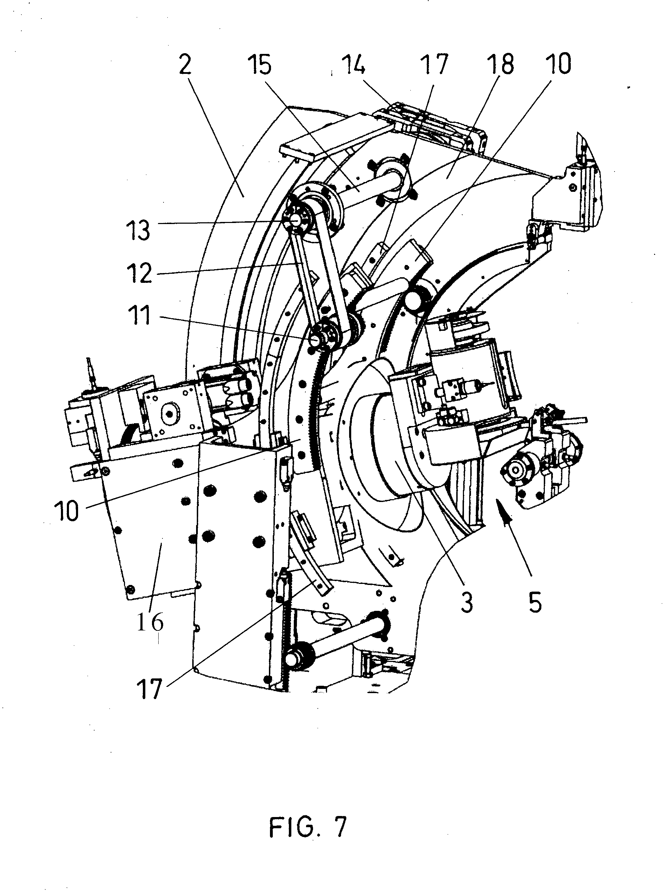

Wie in der Figur 7 erkennbar, lagert die Pinole 3 zwischen den beiden Maschinenlagerwänden 2. In der Figur 2 ist diese vordere Maschinenlagerwand zeichnerisch weggelassen, um so besser sichtbar zu machen, dass die Pinole 3 mit kreisbogenförmig gestalteten Zahnstangen 10 verbunden ist. In die Zahnstangen 10 greifen Ritzel 11 ein. Diese Ritzel lagern in den Maschinenlagerwänden 2 und deren Antriebsseite ragen auf der Aussenseite der Maschinenlagerwände vor und sind über Zahnriemen 12 verbunden, die über Antriebboulies 13 laufen und von einem Antriebsschrittmotor 14 via einer Antriebswelle 15, beidseitig gleichmässig angetrieben werden.

Die Zahnstangen 10 sind fest verbunden, beziehungsweise einstückig geformt mit Haltewangen 16, die wiederum ihrerseits fest mit der Pinole 3 verbunden sind. Diese Haltewangen 16 sind mit kreisbogenförmigen Gleitschienen 17 versehen, die in ebenso geformte Gleitbahnen 18 in den Maschinenlagerwänden 2 auf deren Innenseite gleiten. Dank dieser hochpräzisen Führung der Pinole 3 und der gleichzeitig sehr stabilen Lagerung derselben, lässt sich der Schleifkopf 5 äusserst präzise zustellen und damit selbstverständlich auch die Hartmetalleinsätze sehr genau schleifen.

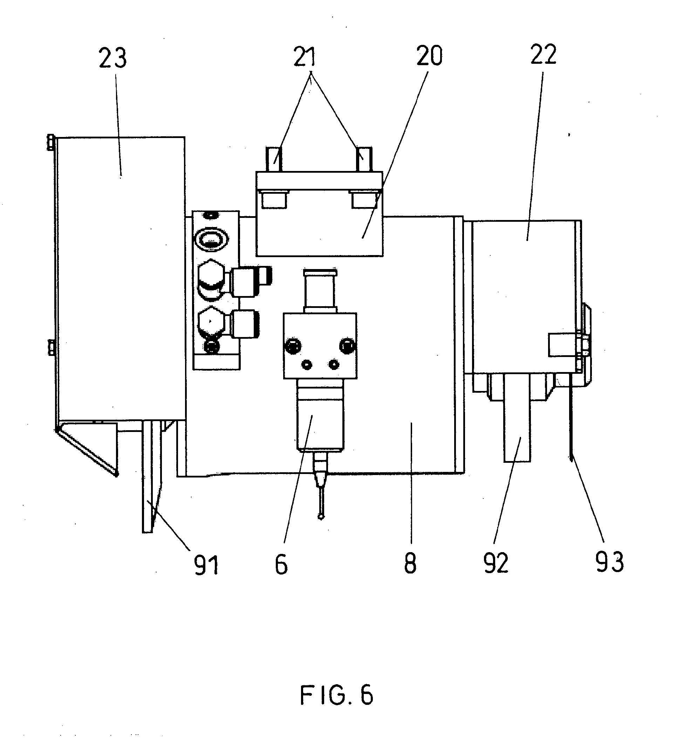

Der Schleifkopf 5 ist in den Figuren 5 und 6 für sich alleine dargestellt. Der Antrieb der Schleifscheiben erfolgt über den bereits erwähnten Antriebsmotor 8. An diesem Antriebsmotor ist eine Konsole 20 befestigt, mittels der der Schleifkopf 5 an der Pinole 3 anschraubbar ist. Entsprechend sind hier vier, die Konsole 20 durchsetzende, Befestigungsschrauben 21 dargestellt. Der Antriebsmotor 8 besitzt eine sich durchsetzende Antriebswelle an der beidseitig des Antriebsmotors 8, Schleifscheiben angeflanscht sind. Diese Schleifscheiben 9 sind mit einem entsprechenden Funkensprühschutzblech 22, beziehungsweise 23, umgeben. Auf der gemeinsamen Welle sind hier drei verschiedene Schleifscheiben 91, 92, 93 gehalten. Insbesondere ist auf der Motorwelle des Antriebmotors 8 eine erste Schleifscheibe 91 in der Figur 6 links erkennbar, wobei diese erste Schleifscheibe eine Egalisierschleifscheibe für das Schleifen der Seitenflächen des Hartmetalleinsatzes 112 dient, welches die Zahnflanken 115 sind. Eine zweite Schleifscheibe 92, welche auf der anderen Seite des Antriebmotors 8 angeordnet ist, ist die Schleifscheibe 92 die zum Schleifen der Zahnbrust 113 und des Zahnrückens 114 dient. Eine dritte Schleifscheibe 93, die auf derselben Welle des Antriebsmotors wie die beiden Schleifscheiben angeflanscht ist, ist eine sogenannte Rillenschleifscheibe, mittels der eine Rille als Spanbrecher in die Zahnbrust 113 des Hartmetalleinsatzes 112 einschleifbar ist.

Wie bereits zuvor erwähnt, lagern die beiden Maschinenlagerwände 2 auf einer Drehscheibe. Im Prinzip braucht diese Drehscheibe nicht zentrisch um eine Drehachse verdrehbar sein, sondern kann auch exzentrisch gelagert sein, so dass dann diese Drehplatte um eine Schwenkachse eine gewisse Drehbewegung durchführen kann. Korrekterweise müsste man in diesem Falle statt von einer Drehlagerplatte 4 von einer Schwenklagerplatte sprechen. Prinzipiell dient diese Schwenkbewegung vor allem dazu, die Zahnflanken zu schleifen, beziehungsweise zu egalisieren, da die Hartmetalleinsätze, die den funktionalen Teil der Sägezähne bilden, an der Schneidkante am breitesten sind und bei gewissen Zahnformen zu den Lötstellen hin auf die Breite des Sägeblattes reduziert sind. Aus diesem Grunde ist der Schwenk-, beziehungsweise Drehwinkel der erforderlicherweise erreicht werden muss, relativ klein. Für die Durchführung gewisser Montagearbeiten, beziehungsweise Unterhaltsarbeiten, kann es jedoch vorteilhaft sein, die Kreissägeblattmaschine so zu gestalten, dass der Schwenkwinkel, beziehungsweise Drehwinkel wesentlich grösser ist. Typische sinnvolle Schwenk-, beziehungsweise Drehwinkel liegen zwischen +30°Grad.

Die erfindungsgemässe Kreissägeblattschleifmaschine 0 ist so konstruiert, dass wie bereits beschrieben, die Längsachse der Pinole 3 die Schneidkante 118 des Hartmetalleinsatzes 112 schneidet. Ebenso schneidet die Dreh- oder Schwenkachse der Drehlagerplatte 4 diese Schneidkante 118 des Hartmetalleinsatzes 112. Je nach Ausrichtung der Pinole 3 kreuzen sich somit die erwähnte Dreh- oder Schwenkachse der Drehplatte 4 und die Längsachse der Pinole 3 auf der Schneidkante 118 real oder windschief. Dank dieser Anordnung können die Schleifscheiben 9, 91, 92, 93 immer optimal eingesetzt werden, nämlich immer mit ihrer planen Seitenflächen, mit Ausnahme der Rillenschleifscheibe 93, die aber auch optimal mit der Umfangsfläche einsetzbar ist. Dies sichert einen hochpräzisen Schliff der Hartmetalleinsätze 112, und damit eine lange Lebensdauer der Hartmetalleinsätze und eine exakte Belastung derselben, was zu einer hohen Lebensdauer der Kreissägeblätter führt.

### Bezugszeichenliste:

- 0: Kreissägeblattschleifmaschine
- 1: Maschinenbett
- 2: Maschinenlagerwand
- 3: Pinole
- 4: Drehlagerplatte
- 5: Schleifkopf
- 6: Positioniertaster
- 7: Aufspannanordnung
- 8: Antriebsmotor
- 9: Schleifscheibe
- 10: Zahnstangen
- 11: Ritzel
- 12: Zahnriemen
- 13: Antriebsboulis
- 14: Antriebsschrittmotor
- 15: Antriebswelle
- 16: Haltewangen
- 17: kreisbogenförmige Gleitschiene
- 18: Gleitbahnen
- 20: Konsole
- 21: Befestigungsschrauben
- 22: Funkensprühschutzblech

- 71: Aufspannplatte
- 72: Drehlager
- 73: horizontale Balken
- 74: vertikaler Stützbalken
- 75: zweiter vertikaler Stützbalken
- 76: Schrittmotor
- 77: Vorschubvorrichtung
- 78: Klinke
- 79: Schiene

- 91: erste Schleifscheibe, Egalizeerschleifscheibe
- 92: zweite Schleifscheibe
- 93: dritte Schleifscheibe, Rillenschleifscheibe

- 110: Kreissägeblatt
- 111: Zahn
- 112: Hartmetalleinsatz
- 113: Zahnbrust
- 114: Zahnrücken
- 115: Zahnflanke
- 116: Auflagefläche
- 117: Auflagefläche
- 118: Schneidkante

## Patentansprüche

1. Kreissägeblattschleifmaschine zum Schleifen der mit Hartmetalleinsätzen (112) versehenen Zähnen (111) eines Kreissägeblattes (110), die eine Schneidkante (118), einen Zahnrücken (114), eine Zahnbrust (113) und zwei Seitenflächen, bzw. Zahnflanken (115) aufweisen, mit einem Maschinenbett (1) und einer Kreissägeblattaufspannungsanordnung (7), einem Schleifkopf (3) mit Positionierungstaster und mindestens einer Schleifscheibe (9) mit einem Antriebsmotor (8), **dadurch gekennzeichnet, dass** der Antriebsmotor (8) schwenkbar an einer Pinole (3) angeordnet ist, die zwischen zwei auf einer Drehlagerplatte angeordneten Maschinenlagerwänden (2) auf zwei kreisbogenförmig verlaufenden Zahnstangen (10) läuft, wobei in jede Maschinenlagerwand (2) je eine der Zahnstangen (10) angeordnet ist, und dass die Drehachse der Schleifscheibe (9) und dessen Antriebsmotors (8) senkrecht zur Längsachse der Pinole (3) verläuft, und wobei die Maschinenlagerwände (2) auf einer Drehachse auf einer Drehlagerplatte schwenk- oder drehbar angeordnet ist, und dass ferner mindestens die Längsachse der Pinole (3) und die Dreh- oder Schwenkachse der Drehlagerplatte (4) so ausgerichtet sind, dass diese sich auf einer Schneidkante (118) des jeweils in Arbeit befindenden Hartmetalleinsatzes (112) kreuzen.

2. Kreissägeblattschleifmaschine nach Anspruch 1, **dadurch gekennzeichnet, dass** die Drehlagerplatte (4) auf dem Maschinenbett (1) gelagert ist.

3. Kreissägeblattschleifmaschine nach Anspruch 1, **dadurch gekennzeichnet, dass** die Drehlagerplatte (4) um einen Drehbolzen schwenkbar gelagert ist.

4. Kreissägeblattschleifmaschine nach Anspruch 1, **dadurch gekennzeichnet, dass** auf der Welle des Antriebsmotors (8) mindestens zwei Schleifscheiben angebracht sind.

5. Kreissägeblattschleifmaschine nach Anspruch 1, **dadurch gekennzeichnet, dass** der Positionierungstaster am Antriebsmotor (8) oder der Pinole (3) befestigt ist.

6. Kreissägeblattschleifmaschine nach Anspruch 1, **dadurch gekennzeichnet, dass** die Pinole (3) höhen- und längsverstellbar ist.

7. Kreissägeblattschleifmaschine nach Anspruch 1, **dadurch gekennzeichnet, dass** der Antriebsmotor (8) mit der Schleifscheibe (9) quer zur Längsachse der Pinole (3) verschiebbar und um dessen Längsachse schwenkbar gelagert ist.

8. Kreissägeblattschleifmaschine nach Anspruch 1, **dadurch gekennzeichnet, dass** die Kreissägeblattaufspannungsanordnung (7) an einem horizontal verlaufenden Balken (73) verschiebbar angeordnet ist.

9. Kreissägeblattschleifmaschine nach Anspruch 4, **dadurch gekennzeichnet, dass** von den mindestens zwei Schleifscheiben (9) eine erste eine Egalisierschleifscheibe (91) für das Schleifen der Seitenflächen, bzw. Zahnflanken (115), und eine zweite Schleifscheibe (92) zum Schleifen der Zahnbrust (113) und des Zahnrückens (114) dient.

10. Kreissägeblattschleifmaschine nach Anspruch 9, **dadurch gekennzeichnet, dass** eine dritte Schleifscheibe (93) auf der gemeinsamen Welle des Antriebsmotors (8) angeflanscht ist, die eine Rillenschleifscheibe ist, mit der eine Rille als Spanbrecher in der Zahnbrust (113) des Hartmetalleinsatzes (112) einschleifbar ist.

11. Kreissägeblattschleifmaschine nach Anspruch 1, **dadurch gekennzeichnet, dass** die beiden kreisförmigen Zahnstangen (10) in je einer Führung (12, 18) gehalten sind und über eine, die beiden Maschinenwände durchsetzenden Antriebswelle (15) mit Ritzel (11)und Antriebsboulis (13) verschiebbar sind, und die Pinole (3) an den beiden Zahnstangen (10) direkt oder mittelbar gehalten ist.

12. Kreissägeblattschleifmaschine nach Anspruch 11, **dadurch gekennzeichnet, dass** der Radius der Zahnstangen (10) gleich dem Abstand der Zahnstange (10) zur Schneidkante (118) des zu bearbeitenden Hartmetalleinsatzes (112) am Kreissägeblatt (110) ist.

13. Kreissägeblattschleifmaschine nach Anspruch 8, **dadurch gekennzeichnet, dass** der horizontale Balken (73) an einem, fest mit dem Maschinenbett verbundenen vertikalen Balken (74), angeflanscht ist.

14. Kreissägeblattschleifmaschine nach Anspruch 13, **dadurch gekennzeichnet, dass** am oberen Ende des vertikalen Balkens (74) eine Vorschubvorrichtung (77) angeordnet ist, die auf dem der Pinole (3) nächstliegenden Hartmetalleinsatz (112) eines Zahns tangential zu drücken vermag und so das Kreissägeblatt (110) um jeweils eine Zahnteilung weiter zu drehen vermag.

## Claims

1. A circular saw blade grinding machine for grinding the teeth (111) of a circular saw blade (110) that are provided with hard metal inserts (112) and feature a cutting edge (118), a tooth back (114), a tooth face (113) and two lateral surfaces or tooth flanks (115), with a machine bed (1) and a circular saw blade fixture (7), a grinding head (3) with a positioning probe and at least one grinding wheel (9) with a driving motor (8), **characterized in that** the driving motor (8) is pivotably arranged on a center sleeve (3) that runs on two arcuate racks (10) between two machine bearing walls (2) arranged on a rotary bearing plate, wherein one of the racks (10) is respectively arranged in each machine bearing wall (2), **in that** the rotational axis of the grinding wheel (9) and its driving motor (8) extends perpendicular to the longitudinal axis of the center sleeve (3), wherein the machine bearing walls (2) are arranged on a rotary bearing plate such that they are pivotable or rotatable about a rotational axis, and **in that** at least the longitudinal axis of the center sleeve (3) and the rotational or pivotal axis of the rotary bearing plate (4) are furthermore aligned in such a way that they intersect on a cutting edge (118) of the respectively working hard metal insert (112).

2. The circular saw blade grinding machine according to claim 1, **characterized in that** the rotary bearing plate (4) is supported on the machine bed (1).

3. The circular saw blade grinding machine according to claim 1, **characterized in that** the rotary bearing plate (4) is supported such that it is pivotable about a pintle.

4. The circular saw blade grinding machine according to claim 1, **characterized in that** at least two grinding wheels are arranged on the shaft of the driving motor (8).

5. The circular saw blade grinding machine according to claim 1, **characterized in that** the positioning probe is fixed on the driving motor (8) or the center sleeve (3).

6. The circular saw blade grinding machine according to claim 1, **characterized in that** the center sleeve (3) is vertically and longitudinally adjustable.

7. The circular saw blade grinding machine according to claim 1, **characterized in that** the driving motor (8) with the grinding wheel (9) is supported such that it is displaceable transverse to the longitudinal axis of the center sleeve (3) and pivotable about its longitudinal axis.

8. The circular saw blade grinding machine according to claim 1, **characterized in that** the circular saw blade fixture (7) is displaceably arranged on a horizontally extending beam (73).

9. The circular saw blade grinding machine according to claim 4 , **characterized in that** a first of the at least two grinding wheels (9) serves as a leveling grinding wheel (91) for grinding the lateral surfaces or tooth flanks (115) and a second grinding wheel (92) serves for grinding the tooth face (113) and the tooth back (114).

10. The circular saw blade grinding machine according to claim 9, **characterized in that** a third grinding wheel (93) is flanged on the common shaft of the driving motor (8) and consists of a fluted grinding wheel, by means of which a flute in the form of a chip breaking flute can be ground into the tooth face (113) of the hard metal insert (112).

11. The circular saw blade grinding machine according to claim 1, **characterized in that** the two circular racks (10) are respectively held in a guide (12, 18) and displaceable by means of a drive shaft (15) with pinion (11) and driving boulis (13) that extends through the two machine walls, and **in that** the center sleeve (3) is directly or indirectly held on the two racks (10).

12. The circular saw blade grinding machine according to claim 11, **characterized in that** the radius of the racks (10) is equal to the distance of the rack (10) from the cutting edge (118) of the hard metal insert (112) to be processed on the circular saw blade (110).

13. The circular saw blade grinding machine according to claim 8, **characterized in that** the horizontal beam (73) is flanged on a vertical beam (74) rigidly connected to the machine bed.

14. The circular saw blade grinding machine according to claim 13, **characterized in that** an advancing device (77) is arranged on the upper end of the vertical beam (74), wherein said advancing device is capable of tangentially pressing against the hard metal insert (112) of a tooth situated closest to the center sleeve (3) and thereby respectively advancing the circular saw blade (110) rotationally by one tooth pitch.

## Revendications

1. Machine à affûter des lames de scie circulaire pour affûter les dents (111) d'une lame de scie circulaire (110) dotées d'inserts en métal dur (112) qui présentent une arête de coupe (118), un dos de dent (114), un front de dent (113) et deux faces latérales, respectivement flancs latéraux (115), comprenant un bâti de machine (1) et un agencement de serrage de lame de scie circulaire (7), une tête d'affûtage (3) avec un bouton-poussoir de positionnement et au moins un disque d'affûtage (9) avec un moteur d'entraînement (8), **caractérisée en ce que** le moteur d'entraînement (8) est disposé pivotant sur un fourreau (3) qui passe entre deux parois de palier de machine (2) disposées sur un plateau de palier rotatif, sur deux crémaillères (10) en arc de cercle, sachant que dans chaque paroi de palier de machine (2) est disposée une crémaillère (10) respective, et que le pivot du disque d'affûtage (9) et son moteur d'entraînement (8) est vertical à l'axe longitudinal du fourreau (3), et sachant que les parois de palier de machine (2) sont disposées pivotantes ou rotatives sur un axe de rotation sur un plateau de palier rotatif, et qu'en outre au moins l'axe longitudinal du fourreau (3) et l'axe de rotation ou de pivotement du plateau de palier rotatif (4) sont ainsi alignés que ceux-ci se croisent sur une arête de coupe (118) de l'insert en métal dur (112) respectif se trouvant en service.

2. Machine à affûter des lames de scie circulaire selon la revendication 1, **caractérisée en ce que** le plateau de palier rotatif (4) est disposé sur le bâti de machine (1).

3. Machine à affûter des lames de scie circulaire selon la revendication 1, **caractérisée en ce que** le plateau de palier rotatif (4) est disposé pivotant sur un boulon d'articulation.

4. Machine à affûter des lames de scie circulaire selon la revendication 1, **caractérisée en ce qu'**au moins deux disques d'affûtage sont disposés sur l'arbre du moteur d'entraînement (8).

5. Machine à affûter des lames de scie circulaire selon la revendication 1, **caractérisée en ce que** le palpeur de positionnement est fixé sur le moteur d'entraînement (8) ou le fourreau (3).

6. Machine à affûter des lames de scie circulaire selon la revendication 1, **caractérisée en ce que** le fourreau (3) est réglable en hauteur et en longueur.

7. Machine à affûter des lames de scie circulaire selon la revendication 1, **caractérisée en ce que** le moteur d'entraînement (8) avec le disque d'affûtage (9) est disposé mobile transversalement à l'axe longitudinal du fourreau (3) et pivotant sur son axe longitudinal.

8. Machine à affûter des lames de scie circulaire selon la revendication 1, **caractérisée en ce que** l'agencement de serrage de lame de scie circulaire (7) est disposé mobile sur une barre horizontale (73).

9. Machine à affûter des lames de scie circulaire selon la revendication 4, **caractérisée en ce que** des au moins deux disques d'affûtage (9), un premier sert de disque d'affûtage d'égalisation (91) pour affûter les faces latérales, respectivement les flancs latéraux (115), et un deuxième disque d'affûtage (92) sert à affûter le front de dent (113) et le dos de dent (114).

10. Machine à affûter des lames de scie circulaire selon la revendication 9, **caractérisée en ce qu'**un troisième disque d'affûtage (93) est bridé sur l'arbre commun du moteur d'entraînement (8) qui est un disque d'affûtage de rainures avec lequel une rainure peut être affûtée en tant brise-copeaux dans le front de dent (113) de l'insert en métal dur (112).

11. Machine à affûter des lames de scie circulaire selon la revendication 1, **caractérisée en ce que** les deux crémaillères circulaires (10) sont maintenues dans un guide (12, 18) respectif et mobiles par un arbre d'entraînement (15) avec pignons (11) et boulis d'entraînement (13), traversant les deux parois de la machine, et le fourreau (3) est maintenu directement ou indirectement sur les deux crémaillères (10).

12. Machine à affûter des lames de scie circulaire selon la revendication 11, **caractérisée en ce que** le rayon des crémaillères (10) est égal à l'écart des crémaillères (10) par rapport à l'arête de coupe (118) de l'insert en métal dur (112) à usiner sur la lame de scie circulaire (110).

13. Machine à affûter des lames de scie circulaire selon la revendication 8, **caractérisée en ce que** la barre horizontale (73) est bridée sur une barre verticale (74) reliée fixement au bâti de la machine.

14. Machine à affûter des lames de scie circulaire selon la revendication 13, **caractérisée en ce qu'**un dispositif d'avancée (77) est disposé sur l'extrémité supérieure de la barre verticale (74) qui peut appuyer tangentiellement sur l'insert en métal dur (112) d'une dent dans le voisinage immédiat du fourreau (3) et peut ainsi continuer de faire tourner la lame de scie circulaire (110) d'un pas de dent respectif.
